# EUROPÄISCHE PATENTSCHRIFT

(11) **EP 0 623 917 B1**
(45) Veröffentlichungstag und Bekanntmachung des Hinweises auf die Patenterteilung: **12.07.2000**
(21) Anmeldenummer: 94201164.4
(22) Anmeldetag: 28.04.1994
(51) Int. Cl.: G11B 5/53, G11B 5/11, G11B 5/187

(54) **Magnetkopf**
Magnetic head
Tête magnétique

(30) Priorität: 03.05.1993 DE 4314423
(43) Veröffentlichungstag der Anmeldung: 09.11.1994
(73) Patentinhaber: Philips Corporate Intellectual Property GmbH, 52064 Aachen (DE); Koninklijke Philips Electronics N.V., 5621 BA Eindhoven (NL)
(72) Erfinder: Heinz, Richard, c/o Philips Patentverwaltung GmbH, D-20097 Hamburg (DE); Willmann, Hartmut, c/o Philips Patentverwaltung, D-20097 Hamburg (DE)
(74) Vertreter: Schmalz, Günther, Dipl.-Ing.

(56) Entgegenhaltungen:
- CH-A- 274 288
- DE-A- 3 622 683
- FR-A- 1 059 977
- GB-A- 1 114 002
- US-A- 2 538 405
- US-A- 4 751 779
- PATENT ABSTRACTS OF JAPAN vol. 3, no. 132 (E-149) 6. November 1979 & JP-A-54 111 320 (MITSUBISHI DENKI K. K.) 31. August 1979
- PATENT ABSTRACTS OF JAPAN vol. 9, no. 170 (P-373) (1893) 16. Juli 1985 & JP-A-60 045 909 (HITACHI SEISAKUSHO K.K.) 12. März 1985
- PATENT ABSTRACTS OF JAPAN vol. 9, no. 20 (P-330) (1743) 26. Januar 1985 & JP-A-59 165 213 (TOKYO DENKI K. K.) 18. September 1984
- PATENT ABSTRACTS OF JAPAN vol. 10, no. 348 (P-519) (2404) 22. November 1986 & JP-A-61 148 617 (TDK CORP) 7. Juli 1986
- PATENT ABSTRACTS OF JAPAN vol. 11, no. 287 (P-617) (2734) 17. September 1987 & JP-A-62 084 412 (HITACHI LTD) 17. April 1987
- PATENT ABSTRACTS OF JAPAN vol. 13, no. 85 (P-834) (3433) 27. Februar 1989 & JP-A-63 266 611 (FUJITSU LTD) 2. November 1988
- PATENT ABSTRACTS OF JAPAN vol. 1, no. 100 (E-042) 5. September 1977 & JP-A-52 033 510 (SANYO SEIKI MFG CO LTD) 14. März 1977
- PATENT ABSTRACTS OF JAPAN vol. 5, no. 84 (P-064) 2. Juni 1981 & JP-A-56 029 822 (HITACHI LTD) 25. März 1981

## Beschreibung

Die Erfindung bezieht sich auf eine Magnetkopfanordnung für ein Magnetbandgerät mit einem drehbar gelagerten Kopfrad, welches am Umfang angeordnete Magnetköpfe aufweist, die jeweils, unter Bildung von Nebenspalten, seitlich angebrachte Zusatzschenkel aufweisen.

Ein derartiger Magnetkopf ist z.B. durch die DE-OS 36 22 683 bekanntgeworden. Bei dieser bekannten Bauart handelt es sich um eine Einrichtung zur Unterdrückung des magnetischen Übersprechens. Dabei sind die genannten Zusatzschenkel dadurch gebildet, daß die Kopfabmessungen in Richtung der Kopfspiegellänge unter Bildung der genannten Nebenspalte verlängert sind. Diese Verlängerungen bilden einen magnetischen Nebenschluß für die aus dem Arbeitsspalt des Magnetkopfes austretenden Kraftlinien. Bei dieser bekannten Bauart enden die als Verlängerungen ausgebildeten seitlichen Schenkel unterhalb der Lauffläche des Magnetbandes, so daß keine Berührung mit dem Magnetband stattfinden kann.

Durch die DE-OS 32 26 446 ist ein Magnetkopf bekanntgeworden, der innerhalb eines Schutzgehäuses angeordnet ist. Bei dieser Bauart wird ein Nebensprechen dadurch reduziert, daß wenigstens eine Seite einer für den Magnetkopfdurchtritt vorgesehenen Öffnung im Schutzgehäuse abgeschrägt ist. Diese Abschrägung kann geradlinig oder bogenförmig ausgebildet sein und ist bei jenen Seiten der Öffnung vorgesehen, welche im wesentlichen senkrecht zur Laufrichtung des magnetischen Aufzeichnungsmediums stehen. Das als besonderes Bauteil ausgebildete Schutzgehäuse berührt das Magnetband nicht.

Ferner ist in den Figuren 1 und 2 der JP-A-54-111 320, ein Magnetkopf gezeigt, dessen Oberfläche in Bandlaufrichtung durch zwei seitlich am Magnetkopf angeordnete Flügelelemente verlängert ist. Den zugehörigen PATENT ABSTRACTS OF JAPAN vol. 3, no. 132, (E-149), 06.11.1979, & JP-A-54 111 320 (MITSUBISHI DENKI K. K.) 31.08.1979, ist zu entnehmen, dass diese Maßnahme zur Verbesserung der Abriebsfestigkeit dient.

Der Erfindung liegt die Aufgabe zugrunde, eine Magnetkopfanordnung der eingangs genannten Art im Hinblick auf die Abschirmung und den Wirkungsgrad zu verbessern.

Diese Aufgabe wird gemäß der Erfindung dadurch gelöst, daß die Zusatzschenkel jedes Magnetkopfes bis in den Laufbereich des Magnetbandes hochgezogen sind und daß die Stirnflächen der Zusatzschenkel mit der Stirnfläche des Magnetkopfes eine gemeinsame Lauffläche bilden. Dadurch, daß die zu beiden Seiten des Magnetkopfes angeordneten Zusatzschenkel eine zusätzliche Lauffläche für das Magnetband bilden, kann der aktive Kopfspiegel des Magnetkopfes sehr klein gewählt werden, entsprechend kann die Breite der Hauptschenkel des Magnetkopfes verkleinert werden. Dies wirkt sich, wie die Erfahrung gezeigt hat, in einer Verbesserung der Effektivität bzw. des Wirkungsgrades aus. Der erfindungsgemäße Magnetkopf ist somit nicht größer als ein konventioneller Magnetkopf. Die große Lauffläche ist vorteilhaft, um Eintaucheffekte kleiner zu halten (Schwingungen). Ferner können Dämpfungskleber gegen sogenannte Rubbing-noise einfach und wirksam angebracht werden. Die hochgezogenen seitlichen Zusatzschenkel bilden einen sehr wirksamen Nebenschluß für den Streufluß.

Die Nebenschlußwirkung wird in vorteilhafter Ausgestaltung der Erfindung dadurch optimiert, daß die Größe der Nebenspalte so gewählt ist, daß kein nennenswerter Kurzschluß des Nutzflusses auftritt, Streufelder jedoch möglichst gut aufgefangen werden.

Eine weitere Verbesserung des Wirkungsgrades ergibt sich dadurch, daß die zwischen den Zusatzschenkeln liegende Lauffläche des Magnetkopfes in einer Richtung quer zur Laufrichtung des Magnetbandes verkleinert ist. Dadurch wird der Kopf/Band-Kontakt verbessert. Diese Wirkung kann noch dadurch verbessert werden, daß die so gebildete Restlauffläche des Magnetkopfes von beiden Seiten aus halbkreisförmig eingeschnürt ist.

In weiterer Ausgestaltung der Erfindung sind die Magnetköpfe mit den jeweiligen Zusatzschenkeln aus einem Stück gefertigt. Jeder Magnetkopf besteht somit aus einer Einheit, nämlich dem eigentlichen aktiven Teil und den Zusatzschenkeln, die den Streufluß aufnehmen. Eine derartige einteilige Bauweise wirkt sich positiv aus auf die Mechanik, die Herstellungskosten und auf die Führung des Bandes.

In weiterer Ausgestaltung der Erfindung ist vorgesehen, daß die Fertigung der Magnetköpfe in Lasertechnik erfolgt. Diese Bauweise ermöglicht eine sehr einfache und kostengünstige Fertigung. Dabei ist auch eine vorteilhafte Winkelentkopplung zwischen dem Kopfspalt (bei Aziumtaufzeichnung) und den Nebenspalten möglich. In einer weiteren Ausgestaltung der Erfindung kann der Magnetkopf auch aus Einzelteilen zusammengesetzt sein, wobei die Einzelteile z.B. durch Schleifen gefertigt und danach zusammengesetzt sind.

In weiterer Ausgestaltung der Erfindung ist jeder Magnetkopf zusätzlich zu der Kopfwicklung mit einer Kurzschlußwicklung versehen. Derartige Kurzschlußwicklungen unterstützen die Wirkung der Zusatzschenkel, die den Streufluß aufnehmen. Die Kurzschlußwicklung kann z.B. eine Windung aus Draht oder Folie sein, die durch Löten oder Laserschweißen verbunden ist. Die Kurzschlußwicklung kann auch aus mehreren Windungen Draht bestehen, die über die Kopfwicklung gewickelt und kurzgeschlossen ist. Als Kurzschlußring kann auch ein geschlossener Ring in die Spalte eingefädelt werden.

In der Zeichnung sind in Fig. 1 und 2 zwei Ausführungsbeispiele des Gegenstandes gemäß der Erfindung schematisch dargestellt. Fig. 3a bis d zeigen Einzelheiten.

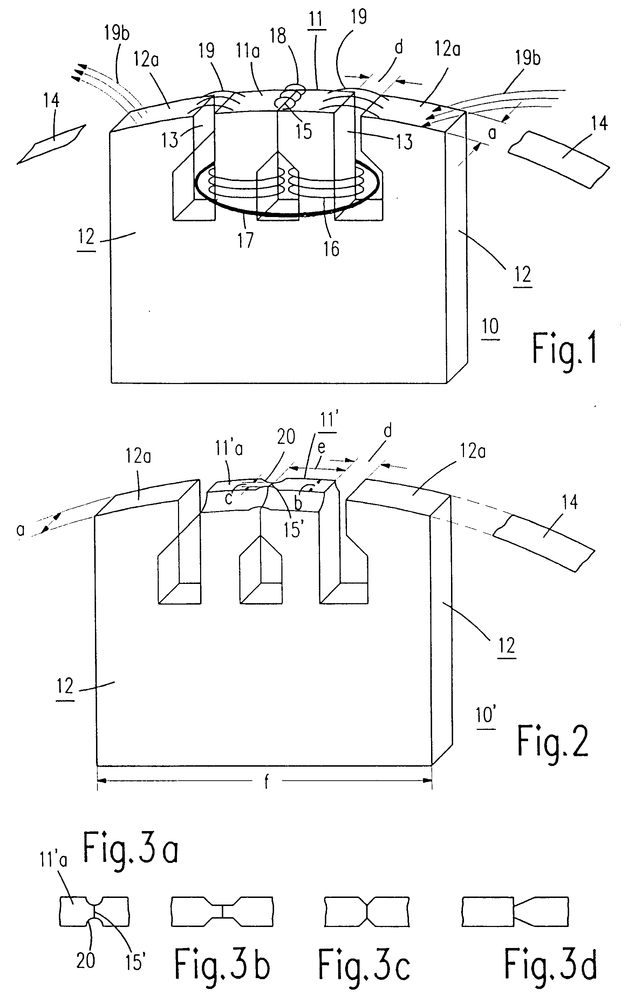

Fig. 1 zeigt einen Magnetkopf 10 mit einem aktiven Teil 11 und zwei seitlich angeordneten, einteilig mit dem aktiven Teil 11 ausgebildeten Zusatzschenkeln 12. Die Zusatzschenkel 12 bilden mit dem aktiven Teil 11 jeweils einen Nebenspalt 13. Die Zusatzschenkel 12 sind bis in den Laufbereich eines Magnetbandes 14 hochgezogen, so daß ihre Stirnflächen 12a mit der Stirnfläche 11a des aktiven Teiles eine gemeinsame Lauffläche bilden. Der aktive Teil 11 besitzt einen Arbeitsspalt 15 und trägt auf seinen Schenkeln eine Kopfwicklung 16 und eine Kurzschlußwicklung 17. Mit 18 ist ein aus dem Arbeitsspalt 15 austretender Nutzfluß bezeichnet, mit dem z.B. das Band 14 beschrieben werden kann. Ein aus der Stirnfläche 11a der Polschenkel austretender und mit 19 bezeichneter Streufluß wird von den seitlich angeordneten Zusatzschenkeln 12 aufgenommen und kann sich somit nicht ausbreiten und störend auswirken.

Im Falle eines Wiedergabekopfes gilt es, den Streufluß 19b einer in der Ferne liegenden Störquelle abzufangen. Infolge der großen räumlichen Ausdehnung der Zusatzschenkel 12 bieten diese dem Streufluß einen sehr viel geringeren magnetischen Widerstand als der aktive Teil 11, so daß nahezu der gesamte Streufluß über die Schenkel 12 fließen kann, ohne ein Störsignal in dem aktiven Teil 11 zu erzeugen.

Das Ausführungsbeispiel gemäß Fig. 2 wurde gegenüber dem nach Fig. 1 dahingehend verändert, daß der aktive Teil 11' quer zur Laufrichtung des Bandes 14 schmaler ausgebildet wurde. Zusätzlich enthält der aktive Teil 11' eine von beiden Seiten ausgehende, hier z.B. halbkreisförmige Einschnürung 20 im Bereich des Arbeitsspaltes 15' zur Definition der Spurbreite c.

Größenordnungsmäßig können folgende Maße für den Magnetkopf 10 bzw. 10' angegeben werden:
a = 200 µm, b = 60 µm, c = 25 µm, d = 100 µm, e = 600 µm, f = 2500 µm, und zwar
bei einer Breite des Arbeitsspaltes 15 bzw. 15' von etwa 0,2 µm.

Fig. 3a bis d zeigen jeweils in Draufsicht eine halbkreisförmige, eine trapezförmige und zwei dreieckförmige Einschnürungen beim aktiven Teil 11' gemäß Fig. 2.

## Patentansprüche

1. Magnetkopfanordnung für ein Magnetbandgerät mit einem drehbar gelagerten Kopfrad, welches am Umfang angeordnete Magnetköpfe (10) aufweist, die jeweils, unter Bildung von Nebenspalten (13), seitlich angebrachte Zusatzschenkel (12) aufweisen,
dadurch gekennzeichnet, daß die Zusatzschenkel (12) jedes Magnetkopfes (13) bis in den Laufbereich des Magnetbandes (14) hochgezogen sind und daß die Stirnflächen (12a) der Zusatzschenkel (12) mit der Stirnfläche (11a) des Magnetkopfes (10) eine gemeinsame Lauffläche bilden.

2. Magnetkopfanordnung nach Anspruch 1,
dadurch gekennzeichnet, daß die Größe der Nebenspalte (13) so gewählt ist, daß kein nennenswerter Kurzschluß des Nutzflusses auftritt, Streufelder jedoch möglichst gut aufgefangen werden.

3. Magnetkopfanordnung nach Anspruch 1 oder 2,
dadurch gekennzeichnet, daß die zwischen den Nebenschenkeln (12) liegende Lauffläche (11a) des Magnetkopfes (10) quer zur Laufrichtung des Magnetbandes (14) verkleinert ist.

4. Magnetkopfanordnung nach Anspruch 3,
dadurch gekennzeichnet, daß die Restlauffläche (11'a) des Magnetkopfes (10') im Bereich des Arbeitsluftspaltes (15') von beiden Seiten aus eingeschnürt (20) ist.

5. Magnetkopfanordnung nach Anspruch 4,
gekennzeichnet durch eine halbkreisförmige (20), dreieckförmige oder trapezförmige Einschnürung.

6. Magnetkopfanordnung nach einem der Ansprüche 1 bis 5,
dadurch gekennzeichnet, daß jeder Magnetkopf (10, 10') mit seinen Zusatzschenkeln (12) aus einem Stück gefertigt ist.

7. Magnetkopfanordnung nach Anspruch 6,
dadurch gekennzeichnet, daß die Fertigung der Spalte (13) und der Restlauffläche (11'a) mit den gegebenenfalls vorgesehenen Einschnürungen (20) durch Lasertechnik erfolgt.

8. Magnetkopfanordnung nach einem der Ansprüche 1 bis 5,
dadurch gekennzeichnet, daß jeder Magnetkopf aus Einzelteilen zusammengesetzt ist.

9. Magnetkopfanordnung nach einem der Ansprüche 1 bis 8,
dadurch gekennzeichnet, daß jeder Magnetkopf (10, 10') zusätzlich zu der Kopfwicklung (16) eine Kurzschlußwicklung (17) trägt.

10. Magnetkopfanordnung nach Anspruch 9,
dadurch gekennzeichnet, daß die Kurzschlußwicklung (17) eine Windung aus Draht oder Folie ist, die durch Löten oder Laserschweißen verbunden ist.

11. Magnetkopfanordnung nach Anspruch 9,
dadurch gekennzeichnet, daß die Kurzschlußwicklung aus mehreren Draht-Windungen besteht, die über die Kopfwicklung (16) gewickelt und kurzgeschlossen sind.

12. Magnetkopfanordnung nach Anspruch 9,
dadurch gekennzeichnet, daß die Kurzschlußwicklung als geschlossener Ring in die Spalte (13) eingefädelt ist.

## Claims

1. A magnetic-head device for a magnetic-tape apparatus comprising a rotatably supported head disc carrying magnetic heads (10) at its periphery, which magnetic heads each have lateral additional limbs (12) disposed so as to form secondary gaps (13),
characterized in that the additional limbs (12) of each magnetic head (13) extend into the transport path of the magnetic tape (14) and in that the end faces (12a) of the additional limbs (12) form a common contact face together with the end face (11a) of the magnetic head (10).

2. A magnetic-head device as claimed in Claim 1,
characterized in that the secondary gaps (13) are dimensioned in such a manner that there is no appreciable short-circuit of the useful flux but that spurious fields are intercepted in an optimum manner.

3. A magnetic-head device as claimed in Claim 1 or 2,
characterized in that the end face (11a) disposed between the additional limbs (12) is narrowed in a direction transverse to the transport direction of the magnetic tape (14).

4. A magnetic-head device as claimed in Claim 3,
characterized in that the residual contact face (11'a) of the magnetic head (10') has a constriction (20) at both sides in the area of the active air gap (15').

5. A magnetic-head device as claimed in Claim 4,
characterized by a semicircular (20), triangular or trapezoidal constriction.

6. A magnetic-head device as claimed in any one of the Claims 1 to 5,
characterized in that each magnetic head (10, 10') has been manufactured with integral additional limbs (12).

7. A magnetic-head device as claimed in Claim 6,
characterized in that the gap (13) and the residual contact face (11'a) with the constrictions (20), if any, are manufactured by means of a laser technique.

8. A magnetic-head device as claimed in any one of the Claims 1 to 5,
characterized in that each magnetic head has been assembled from separate parts.

9. A magnetic-head device as claimed in any one of the Claims 1 to 8,
characterized in that in addition to the head winding (16) each magnetic head (10, 10') carries a short-circuit winding (17).

10. A magnetic-head device as claimed in Claim 9,
characterized in that the short-circuit winding (17) is formed by a turn of wire or foil connected by soldering or laser-welding.

11. A magnetic-head device as claimed in Claim 9,
characterized in that the short-circuit winding consists of a plurality of turns of wire wound over the head winding (16) and short-circuited.

12. A magnetic-head device as claimed in Claim 9,
characterized in that the short-circuit winding is a closed ring threaded into the gap (13).

## Revendications

1. Tête magnétique pour un appareil à bande magnétique avec une roue de tête logée à rotation qui présente des têtes magnétiques (10) disposées sur sa périphérie, lesquelles présentent respectivement en formant des fentes accessoires (13) des côtés supplémentaires (12) disposés latéralement,
caractérisée en ce que les côtés supplémentaires (12) de chaque tête magnétique (13) sont relevés jusqu'à la zone de roulement de la bande magnétique (14) et que les surfaces d'about (12a) des côtés supplémentaires (12) forment avec la surface d'about (11a) de la tête magnétique (10) une surface de roulement commune.

2. Tête magnétique selon la revendication 1,
caractérisée en ce que la taille de la fente accessoire (13) est choisie de telle sorte qu'il ne se produise pas de court-circuit notable du flux utile mais que les champs de dispersion soient absorbés le mieux possible.

3. Tête magnétique selon l'une des revendications 1 ou 2,
caractérisée en ce que la surface de roulement (11a) de la tête magnétique (10) disposée entre les côtés (12) accessoires est réduite perpendiculairement au sens de roulement de la bande magnétique (14).

4. Tête magnétique selon la revendication 3,
caractérisé en ce que la surface de roulement résiduelle (11'a) de la tête magnétique (10') est rétrécie des deux côtés dans la région de l'entrefer de travail (15').

5. Tête magnétique selon la revendication 4,
caractérisée par un rétrécissement semi-circulaire (20), triangulaire ou trapézoïdal.

6. Tête magnétique selon l'une des revendications 1 à 5,
caractérisée en ce que chaque tête magnétique (10, 10') est fabriquée en une seule pièce avec ses côtés supplémentaires (12).

7. Tête magnétique selon la revendication 6,
caractérisée en ce que la fabrication de la fente (13) et de la surface de roulement résiduelle (11'a) avec les rétrécissements (20) éventuellement prévus est réalisée par une technique au laser.

8. Tête magnétique selon l'une des revendications 1 à 5,
caractérisée en ce que chaque tête magnétique est composée de pièces individuelles.

9. Tête magnétique selon l'une des revendications 1 à 8,
caractérisée en ce que chaque tête magnétique (10, 10') porte un enroulement de court-circuit (17) en plus de l'enroulement de tête (16).

10. Tête magnétique selon la revendication 9,
caractérisée en ce que l'enroulement de court-circuit (17) est un enroulement en fil ou en feuille qui est fixé par brasage ou soudage au laser.

11. Tête magnétique selon la revendication 9,
caractérisée en ce que l'enroulement de court-circuit se compose de plusieurs enroulements de fils qui sont enroulés et court-circuités par l'intermédiaire de l'enroulement de tête (16).

12. Tête magnétique selon la revendication 9,
caractérisée en ce que l'enroulement de court-circuit est inséré dans la fente (13) comme une bague fermée.
